# EUROPEAN PATENT SPECIFICATION

(11) **EP 3 960 508 B1**
(45) Date of publication and mention of the grant of the patent: **02.04.2025**
(21) Application number: 20795332.4
(22) Date of filing: 21.04.2020
(51) Int. Cl.: B60D 1/155, B60D 1/46, B60D 1/145, B60D 1/66

(54) **SYSTEM FOR CONNECTING A TRAILER AND A TRUCK**
SYSTEM ZUM VERBINDEN EINES ANHÄNGERS UND EINES LASTKRAFTWAGENS
SYSTÈME DE LIAISON ENTRE REMORQUE ET CAMION

(30) Priority: 22.04.2019 ES 201930358
(43) Date of publication of application: 02.03.2022
(73) Proprietor: Efitrans Efficient Logistics, S.L., 36202 Vigo (Pontevedra) (ES)
(72) Inventor: CABRERA AREAL, Miguel, 36202 Vigo - Pontevedra (ES)
(74) Representative: ABG Intellectual Property Law, S.L.
(86) International application number: PCT/ES2020/070251
(87) International publication number: WO 2020/216974

(56) References cited:
- EP-A2- 1 216 856
- DE-A1- 4 301 055
- US-A- 1 894 320
- US-A- 2 628 126
- US-A- 4 589 670
- US-A1- 2012 013 093
- US-B1- 7 004 548

## Description

### Field of the Invention

The present invention relates to a system for connecting a trailer and a truck which allows improving the truck loading operation with the trailer connected to the truck, therefore improving the efficiency of the assembly loading. The articulated-extendable system for connecting the trailer and the truck object of the invention is applicable in the logistics industry, namely in the road transport industry.

### Background of the Invention

Systems for connecting a trailer and a truck known in the state of the art are rigid systems, which are attached to the trailer and to the truck, and do not allow the height of the vehicle to which they are connected to be elevated without unhitching the drawbar of the truck, given that since the drawbar is rigid, the trailer hitch does not allow this elevation in height.

Likewise, the rigid nature of the system for connecting means that the truck and the trailer cannot be brought closer together without unhitching the drawbar connecting them together, which means that loading the trailer and the truck cannot be done in a continuous manner without that disconnection, and given that the unhitching is a complicated operation, it is not often done, but rather the trailer and the truck are loaded separately.

Known in the state of the art is patent document ES2049263 T3, which discloses a short coupling with a variable geometry for trailers in which connection means with elastic memory are connected in a position of minimum spacing between the trailer and the truck, with two symmetrical supports for abutting and pivoting the front face of the trailer relative to the rear face of the truck at the level of each corner, around a vertical axis located as close as possible to each corner, in order to obtain a trajectory which clears the entire front face of the trailer when it is pivoted while turning a corner.

Also known is patent document FR2636011A, which discloses a device for hitching a trailer and a trailer vehicle in particular having a drawbar mounted with the ability to move in a guided manner with respect to a fixed portion of the trailer, said drawbar being secured to a mechanism of the hydropneumatic type slaved by a control circuit by means of at least one sensor arranged level with the hitch to be urged or otherwise as a function of the angles between the towing vehicle and the trailer, both in a vertical and in horizontal plane. US7004548 B1 discloses a system for connecting a trailer.

### Description of the Invention

An object of the invention relates to a system for connecting a trailer with a loading platform and a truck with a loading platform, which comprises a drawbar configured to be attached to the truck and to the trailer.

In the system for connecting object of the invention, the drawbar comprises a first tubular body and a second tubular body with the ability to move linearly with respect to the first tubular body.

Furthermore, to attach the drawbar to the trailer the system comprises a first support comprising a drawbar attachment part and a trailer attachment part, such that between the drawbar attachment part and the trailer attachment part the first support comprises a rotation shaft for the drawbar, and it also comprises a second support comprising a drawbar attachment part and a trailer attachment part, and attachment means between the drawbar attachment part and the trailer attachment part.

The system for connecting object of the invention further comprises a trailer-elevating mechanism configured for elevating the height of the trailer with respect to the ground.

In the system for connecting object of the invention, when the drawbar attachment part and the trailer attachment part of the second support are not connected and the elevating mechanism is switched on, the system levels the height of the loading platforms of the truck and the trailer, and such that when the drawbar attachment part and the trailer attachment part of the second support are connected, the drawbar is connected to the trailer in a rigid manner, and when the trailer-elevating mechanism does not act, the system for connecting provides a connection between the trailer and truck under safe conditions for travel.

In the system for connecting a trailer and a truck object of the invention, the first tubular body comprises four flat parts identical to each other in pairs, which are connected configuring a box beam comprising a central housing having a complementary section relative to the second tubular body and two protrusions on each side of the central housing.

In the second support of the system for connecting a trailer and a truck, the drawbar attachment part comprises two lugs connected by a lower plate and an upper plate in each side housing of the first tubular body, such that each upper plate comprises an opening; the trailer attachment part comprises a main beam with two side flats and a support element connected to the side flats, such that the support element comprises a frustoconical-shaped protrusion configured for being housed in the opening of the upper plate.

In the system for connecting a trailer and a truck object of the invention, the attachment means between the drawbar attachment part and the trailer attachment part of the second support comprise a pin configured for being introduced in a housing of the frustoconical-shaped protrusion of the support element of the trailer attachment part and abutting with the lower plate of the drawbar attachment part, such that with the frustoconical-shaped protrusion housed between the lower plate and the upper plate, the pin attaches the trailer attachment part to the drawbar attachment part.

In another embodiment of the system for connecting a trailer and a truck object of the invention, the attachment means between the drawbar attachment part and the trailer attachment part of the second support comprise pneumatic attachment means.

In the system for connecting a trailer and a truck object of the invention, the trailer-elevating mechanism comprises telescopic supports with the ability to rotate with respect to the trailer.

The telescopic supports of the system for connecting a trailer and a truck object of the invention are to be chosen from pneumatic, hydraulic, mechanical, and a combination thereof.

### Brief Description of the Drawings

To complement the description provided below and for the purpose of helping to better understand the features of the invention, a set of drawings is attached to the present specification, and based on said drawings the innovations and advantages of the device object of the invention will be more readily understood.

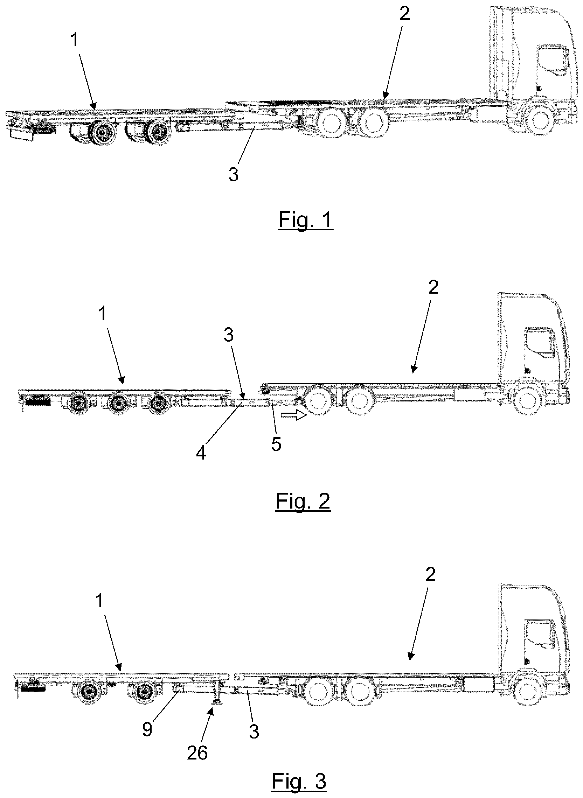

Figure 1 shows a perspective view of a road train in the travel position, made up of a truck and a trailer, in which the system of the invention is shown connecting both vehicles to one another.
Figure 2 shows a detail view of a truck and a trailer with the system for connecting object of the invention in its position for connecting the first support and with the drawbar in its extended position.
Figure 3 shows a view of a truck and a trailer with the system for connecting object of the invention connecting both vehicles in its position for releasing the second support.

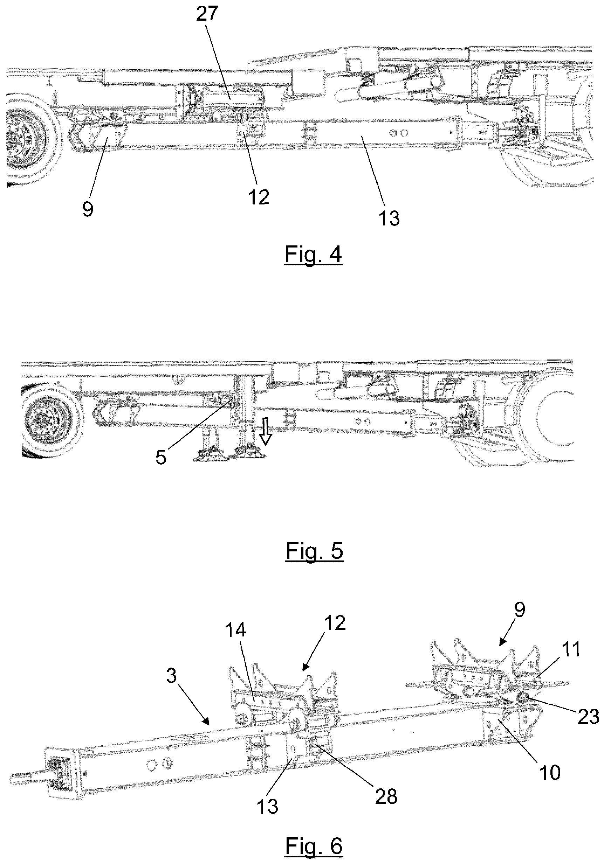

Figure 4 shows a perspective view of the system of the invention, in which the drawbar and the trailer-elevating mechanism are shown in the travel position.
Figure 5 shows a perspective view of the system of the invention, in which the drawbar and the trailer-elevating mechanism are shown in a loading/unloading position.
Figure 6 shows a perspective view of the drawbar of the system of the invention in its drawn in position.

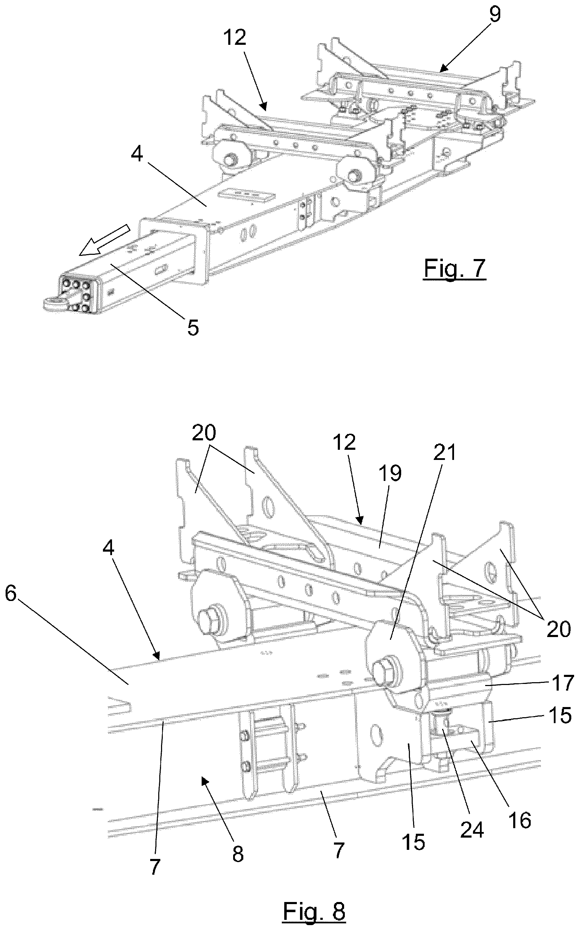

Figure 7 shows a perspective view of the drawbar of the system of the invention in its extended position.
Figure 8 shows a detail view of the second support of the drawbar of the system of the invention closed.

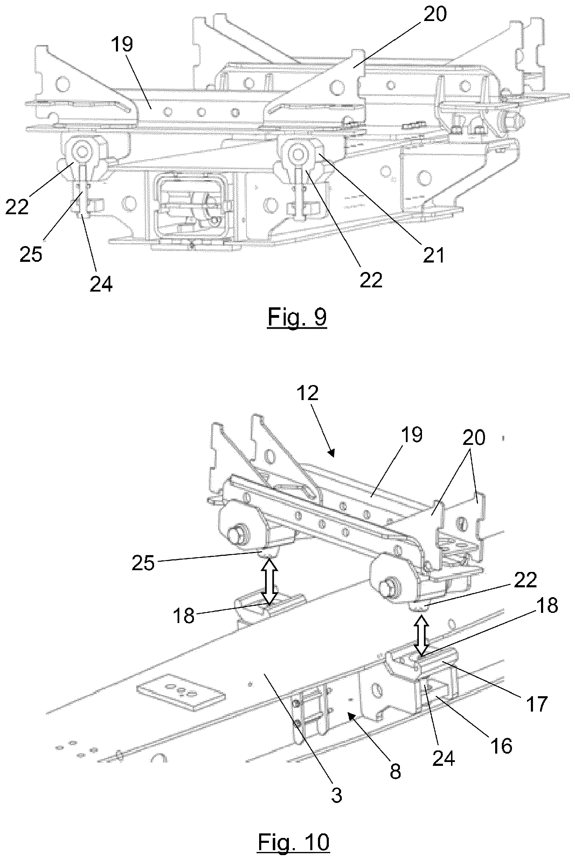

Figure 9 shows a detail view of a section of the second support in its closed position for travel, with the upper and lower portions fitting together.
Figure 10 shows a detail view of the first support of the drawbar of the system of the invention, open, showing the upper portion of the support free with respect to the lower portion.

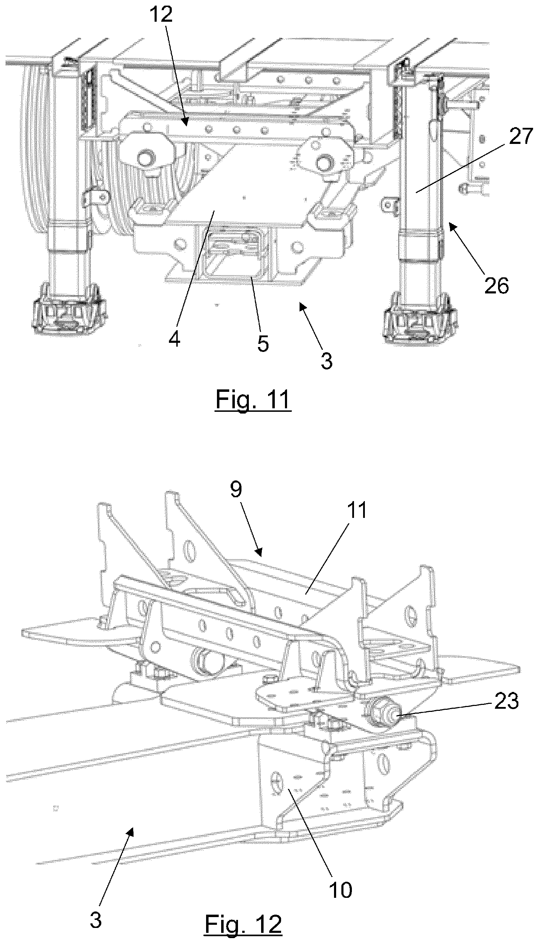

Figure 11 shows a detail view of the anchoring of the second support to the frame of the trailer, in its free position, i.e., with the upper portion not being fitted in the lower portion, loading/unloading position.
Figure 12 shows a detail view of the first support.

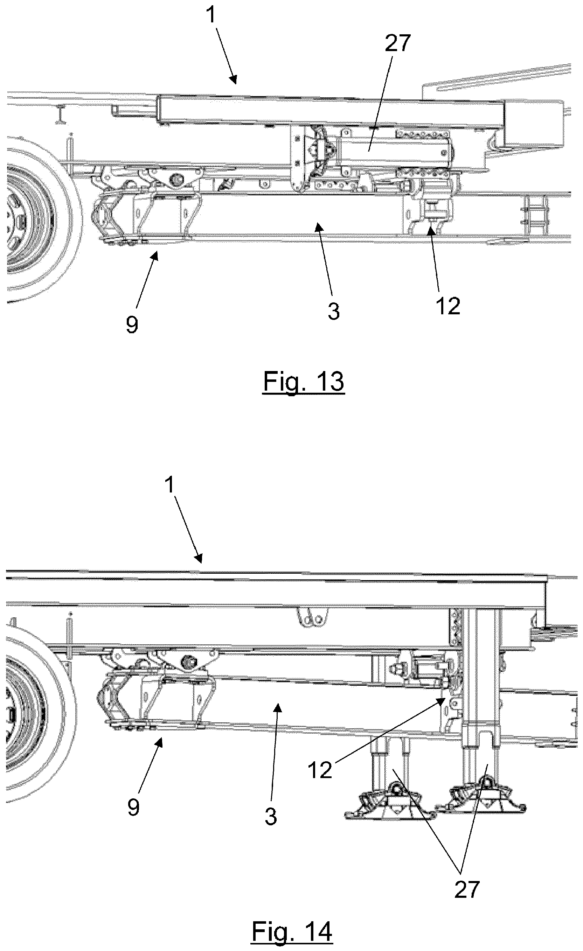

Figure 13 shows a detail view of the trailer-elevating mechanism of the system object of the invention when the road train is in the running position.
Figure 14 shows a detail view of the trailer-elevating mechanism of the system object of the invention when the road train is in the loading/unloading position.

The different reference numbers shown in the figures correspond to the following elements:
1. trailer
2. truck
3. drawbar
4. first tubular body
5. second tubular body
6. central body
7. flanges
8. side housing
9. first support
10. drawbar attachment part of the first support
11. trailer attachment part of the first support
12. second support
13. drawbar attachment part of the second support
14. trailer attachment part of the second support
15. lug
16. lower plate
17. upper plate
18. opening
19. main beam
20. side flat
21. support element
22. protrusion
23. rotation shaft
24. pin
25. housing of the protrusion
26. trailer-elevating mechanism
27. telescopic supports
28. attachment means between the drawbar attachment part and the trailer attachment part of the second support

### Detailed Description of the Invention

The system for connecting a trailer (1) and a truck (2) object of the invention comprises a drawbar (3) for connecting the truck (2) and the trailer (1), said drawbar (3) comprising a first tubular body (4) and a second tubular body (5) housed inside the first tubular body (4), such that the second tubular body (5) has ability to move linearly relative to the first tubular body (4), i.e., the drawbar (3) has a telescopic configuration.

In the preferred embodiment of the invention, the first tubular body (4) comprises four flat parts identical to each other in pairs, which parts are connected forming a box beam, comprising:
- a central housing (6) having a complementary section relative to the second tubular body (5), which is housed inside the first tubular body (4),
- two protrusions (7) on each side of the central housing (6), such that between two protrusions a side housing (8) is configured on each side of the central housing (6).

For attaching the drawbar (3) to the trailer (1), the system object of the invention comprises:
- a first support (9) comprising a drawbar attachment part (10) and a trailer attachment part (11), such that between the drawbar attachment part (10) and the trailer attachment part (11) the first support (9) comprises a rotation shaft (23) around which the drawbar (3) has the ability to rotate, and
- a second support (12) comprising a drawbar attachment part (13) and a trailer attachment part (14), and attachment means (28) between the drawbar attachment part (13) and the trailer attachment part (14), such that by connecting the drawbar attachment part (13) and the trailer attachment part (14), the drawbar (3) is connected to the trailer (1) by the two supports (9, 12) and the drawbar (3) is positioned parallel with the running plane of the truck (2) and trailer (1) assembly.

The attachment of the drawbar (3) to the truck (2) is performed by attachment means known in the state of the art.

In the preferred embodiment of the second support (12), the drawbar attachment part (13) comprises two lugs (15) connected by a lower plate (16) and an upper plate (17) in each side housing (8) of the first tubular body (4), such that each upper plate (17) comprises an opening (18). Likewise, the trailer attachment part (14) comprises a main beam (19) with two side flats (20) and a support element (21) connected to the side flats (20) such that the support element (21) has a frustoconical-shaped protrusion (22) configured for being housed in the opening (18) of the upper plate (17).

In the preferred embodiment of the invention, the attachment means (28) between the drawbar attachment part (13) and the trailer attachment part (14) of the second support (12) comprise a pin (24) which is introduced in a housing (25) of the frustoconical-shaped protrusion (22) of the support element (21) of the trailer attachment part (14) and abuts with the lower plate (16) of the drawbar attachment part (13), such that the frustoconical-shaped protrusion (22) is housed between the lower plate (16) and the upper plate (17) with the support element (21) against the upper plate (17) and the pin (24) attaching the trailer attachment part (14) to the drawbar attachment part (13).

In another embodiment of the invention, the attachment means (28) between the drawbar attachment part (13) and the trailer attachment part (14) of the second support (12) comprise pneumatic attachment means which act similarly to the pin (24).

The system object of the invention also comprises a trailer-elevating mechanism (26) configured for elevating the height of the trailer (1) with respect to the ground, such that the floor of the trailer (1) and the floor of the truck (2) are flush with one another.

In the preferred embodiment of the invention, the trailer-elevating mechanism (26) comprises telescopic supports (27) with the ability to rotate with respect to the connection with the trailer (1).

The telescopic supports (27) of the trailer-elevating mechanism (26) of the system object of the invention are to be chosen from pneumatic, hydraulic, mechanical, and a combination thereof.

Therefore, the system for connecting a truck and a trailer object of the invention has two positions:
- a truck loading position, in which the drawbar is disconnected from the second support (12), with the trailer-elevating mechanism (26) elevating said trailer (1) and with the second tubular body (5) inside the first tubular body (4), i.e., the trailer (1) is in a position close to the truck (2), with the loading platforms at the same level and therefore facilitating the loading of the truck plus trailer assembly from the rear part thereof with a forklift truck that can go from the trailer to the truck without interruption.
- a travel position, in which the drawbar (3) is attached both to the first support (9) and to the second support (12) and is in a position parallel to the running plane of the truck (2) plus trailer (1) assembly, the trailer-elevating mechanism (26) is switched off, and the second tubular body (5) is in the extended position, i.e., with most of said second tubular body outside of the first tubular body (4).

In the travel position, since the trailer (1) has been lowered, its upper portion is flush with the upper portion of the truck, but it has additional load height since the loading platform is located thereunder, and the distance between a trailer (1) and a truck (2) is the standard distance between same for safe travel.

## Claims

1. A system for connecting a trailer (1) with a loading platform and a truck (2) with a loading platform, which comprises a drawbar (3) configured to be attached to the truck (2) and to the trailer (1), wherein:
- the drawbar (3) comprises a first tubular body (4) and a second tubular body (5) with the ability to move linearly with respect to the first tubular body (4),
- to attach the drawbar (3) to the trailer (1), the system comprises:
- a first support (9) comprising a drawbar attachment part (10) and a trailer attachment part (11), such that between the drawbar attachment part (10) and the trailer attachment part (11) the first support (9) comprises a rotation shaft (23) for the drawbar (3), and
- a second support (12) comprising a drawbar attachment part (13) and a trailer attachment part (14), and attachment means (28) between the drawbar attachment part (13) and the trailer attachment part (14),
- the system further comprises a trailer-elevating mechanism (26) configured for elevating the height of the trailer (1) with respect to the ground,
such that when the drawbar attachment part (13) and the trailer attachment part (14) of the second support (12) are not connected and the elevating mechanism is switched on, the system levels the height of the loading platforms of the truck and the trailer (1), and such that when the drawbar attachment part (13) and the trailer attachment part (14) of the second support (12) are connected, the drawbar (3) is connected to the trailer (1) in a rigid manner, and the trailer-elevating mechanism (26) does not act, the system for connecting provides a connection between the trailer (1) and the truck under safe conditions for travel.

2. The system for connecting a trailer (1) and a truck (2) according to claim 1, **characterized in that**:
- the first tubular body (4) comprises four flat parts identical to each other in pairs, which are connected configuring a box beam comprising a central housing (6) having a complementary section relative to the second tubular body (5) and two protrusions (7) on each side of the central housing (6),
- in the second support (12):
- the drawbar attachment part (10) comprises two lugs (15) connected by a lower plate (16) and an upper plate (17) in each side housing (8) of the first tubular body (4), such that each upper plate (17) comprises an opening (18);
- the trailer attachment part (11) comprises a main beam (19) with two side flats (20) and a support element (21) connected to the side flats (20),
such that the support element (21) comprises a frustoconical-shaped protrusion (22) configured for being housed in the opening (18) of the upper plate (17).

3. The system for connecting a trailer (1) and a truck (2) according to claim 2, **characterized in that** the attachment means (28) between the drawbar attachment part (13) and the trailer attachment part (14) of the second support (12) comprise a pin (24) configured for being introduced in a housing (25) of the frustoconical-shaped protrusion (22) of the support element (21) of the trailer attachment part (14) and abutting with the lower plate (16) of the drawbar attachment part (13), such that with the frustoconical-shaped protrusion (22) housed between the lower plate (16) and the upper plate (17), the pin (24) attaches the trailer attachment part (14) to the drawbar attachment part (13).

4. The system for connecting a trailer (1) and a truck (2) according to claim 2, **characterized in that** the attachment means (28) between the drawbar attachment part (13) and the trailer attachment part (14) of the second support (12) comprise pneumatic attachment means.

5. The system for connecting a trailer (1) and a truck (2) according to any of claims 1 to 4, **characterized in that** the trailer-elevating mechanism (26) comprises telescopic supports (27) with the ability to rotate with respect to the trailer (1).

6. The system for connecting a trailer (1) and a truck (2) according to claim 5, **characterized in that** the telescopic supports (27) are to be chosen from pneumatic, hydraulic, mechanical, and a combination thereof.

## Patentansprüche

1. System zum Verbinden eines Anhängers (1) mit einer Ladefläche und eines Lastkraftwagens (2) mit einer Ladefläche, umfassend eine zum Anbringen am Lastkraftwagen (2) und am Anhänger (1) ausgestaltete Deichsel (3), wobei:
- die Deichsel (3) einen ersten rohrförmigen Körper (4) und einen zweiten rohrförmigen Körper (5) mit der Eignung zur linearen Bewegung in Bezug auf den ersten rohrförmigen Körper (4) umfasst,
- um die Deichsel (3) an dem Anhänger (1) anzubringen, umfasst das System:
- einen ersten Träger (9) umfassend ein Deichselbefestigungsteil (10) und ein Anhängerbefestigungsteil (11), so dass der erste Träger (9) zwischen dem Deichselbefestigungsteil (10) und dem Anhängerbefestigungsteil (11) eine Drehwelle (23) für die Deichsel (3) umfasst, und
- einen zweiten Träger (12) umfassend ein Deichselbefestigungsteil (13) und ein Anhängerbefestigungsteil (14), und Befestigungsmittel (28) zwischen dem Deichselbefestigungsteil (13) und dem Anhängerbefestigungsteil (14),
- das System ferner einen Anhänger-Hebemechanismus (26) umfasst, der zum Anheben der Höhe des Anhängers (1) in Bezug auf den Boden ausgestaltetet ist,
so dass, wenn das Deichselbefestigungsteil (13) und das Anhängerbefestigungsteil (14) des zweiten Trägers (12) nicht verbunden sind und der Hebemechanismus eingeschaltet ist, das System die Höhe der Ladeflächen des Lastkraftwagens und des Anhängers (1) ausgleicht, und so dass, wenn das Deichselbefestigungsteil (13) und das Anhängerbefestigungsteil (14) des zweiten Trägers (12) verbunden sind, die Deichsel (3) fest mit dem Anhänger (1) verbunden ist und der Anhänger-Hebemechanismus (26) nicht aktiv ist, das System zum Verbinden eine Verbindung zwischen dem Anhänger (1) und dem Lastkraftwagen unter sicheren Fahrbedingungen bereitstellt.

2. System zum Verbinden eines Anhängers (1) und eines Lastkraftwagens (2) nach Anspruch 1, **dadurch gekennzeichnet, dass**:
- der erste rohrförmige Körper (4) vier paarweise identische flache Abschnitte umfasst, die miteinander verbunden einen Kastenbalken bilden, umfassend ein zentrales Gehäuse (6) mit einem zum zweiten rohrförmigen Körper (5) komplementären Querschnitt und zwei Vorsprüngen (7) auf jeder Seite des zentralen Gehäuses (6),
- im zweiten Träger (12):
- das Deichselbefestigungsteil (10) zwei Laschen (15) umfasst, die durch eine untere Platte (16) und eine obere Platte (17) an jeder Seite des Gehäuses (8) des ersten rohrförmigen Körpers (4) verbunden sind, so dass jede obere Platte (17) eine Öffnung (18) umfasst;
- das Anhängerbefestigungsteil (11) einen Hauptträger (19) mit zwei Seitenflächen (20) und ein mit den Seitenflächen (20) verbundenes Stützelement (21) umfasst,
so dass das Stützelement (21) einen zur Unterbringung in der Öffnung (18) der oberen Platte (17) ausgestalteten kegelstumpfförmigen Vorsprung (22) umfasst.

3. System zum Verbinden eines Anhängers (1) und eines Lastkraftwagens (2) nach Anspruch 2, **dadurch gekennzeichnet, dass** die Befestigungsmittel (28) zwischen dem Deichselbefestigungsteil (13) und dem Anhängerbefestigungsteil (14) des zweiten Trägers (12) einen Stift (24) umfassen, der so ausgestaltet ist, dass er in eine Aussparung (25) des kegelstumpfförmigen Vorsprungs (22) des Stützelements (21) des Anhängerbefestigungsteils (14) eingeführt wird und an der unteren Platte (16) des Deichselbefestigungsteils (13) anliegt, so dass der Stift (24) mit dem zwischen der unteren Platte (16) und der oberen Platte (17) angeordneten kegelstumpfförmigen Vorsprung (22) das Anhängerbefestigungsteil (14) am Deichselbefestigungsteil (13) anbringt.

4. System zum Verbinden eines Anhängers (1) und eines Lastkraftwagens (2) nach Anspruch 2, **dadurch gekennzeichnet, dass** die Befestigungsmittel (28) zwischen dem Deichselbefestigungsteil (13) und dem Anhängerbefestigungsteil (14) des zweiten Trägers (12) pneumatische Befestigungsmittel aufweisen.

5. System zum Verbinden eines Anhängers (1) und eines Lastkraftwagens (2) nach einem der Ansprüche 1 bis 4, **dadurch gekennzeichnet, dass** der Anhänger-Hebemechanismus (26) Teleskopstützen (27) mit der Eignung zur Drehung in Bezug auf den Anhänger (1) umfasst.

6. System zum Verbinden eines Anhängers (1) und eines Lastkraftwagens (2) nach Anspruch 5, **dadurch gekennzeichnet, dass** die Teleskopstützen (27) ausgewählt sind unter pneumatisch, hydraulisch, mechanisch und einer Kombination davon.

## Revendications

1. Un système pour relier une remorque (1) avec une plate-forme de chargement et un camion (2) avec une plate-forme de chargement, qui comprend un timon (3) configuré pour être attaché au camion (2) et à la remorque (1), dans lequel :
- le timon (3) comprend un premier corps tubulaire (4) et un deuxième corps tubulaire (5) capable de se déplacer linéairement par rapport au premier corps tubulaire (4),
- pour attacher le timon (3) à la remorque (1), le système comprend :
- un premier support (9) comprenant une partie de fixation du timon (10) et une partie de fixation de la remorque (11), de sorte qu'entre la partie de fixation du timon (10) et la partie de fixation de la remorque (11), le premier support (9) comprend un arbre de rotation (23) pour le timon (3), et
- un deuxième support (12) comprenant une partie de fixation du timon (13) et une partie de fixation de la remorque (14), et des moyens de fixation (28) entre la partie de fixation du timon (13) et la partie de fixation de la remorque (14),
- le système comprend en outre un mécanisme d'élévation de la remorque (26) configuré pour élever la hauteur de la remorque (1) par rapport au sol,
de telle sorte que lorsque la partie de fixation du timon (13) et la partie de fixation de la remorque (14) du deuxième support (12) ne sont pas connectés et le mécanisme d'élévation est activé, le système nivelle la hauteur des plates-formes de chargement du camion et de la remorque (1), et de sorte que lorsque la partie de fixation du timon (13) et la partie de fixation de la remorque (14) du deuxième support (12) sont reliés, le timon (3) est relié à la remorque (1) de manière rigide, et le mécanisme d'élévation de la remorque (26) n'agit pas, le système de connexion permet de relier la remorque (1) au camion dans des conditions de sécurité pour les déplacements.

2. Le système pour relier une remorque (1) et un camion (2) selon la revendication 1, **caractérisé en ce que** :
- le premier corps tubulaire (4) comprend quatre parties plates identiques par paires, qui sont reliées pour former une poutre caisson comprenant un logement central (6) ayant une section complémentaire par rapport au deuxième corps tubulaire (5) et deux saillies (7) de chaque côté du logement central (6),
- dans le deuxième support (12) :
- la pièce de fixation du timon (10) comprend deux pattes (15) reliées par une plaque inférieure (16) et une plaque supérieure (17) dans chaque logement latéral (8) du premier corps tubulaire (4), de telle sorte que chaque plaque supérieure (17) comporte une ouverture (18) ;
- la pièce de fixation de la remorque (11) comprend une poutre principale (19) avec deux plats latéraux (20) et un élément de support (21) relié aux plats latéraux (20),
de telle sorte que l'élément de support (21) comprend une protubérance de forme tronconique (22) configurée pour être logée dans l'ouverture (18) de la plaque supérieure (17).

3. Système pour relier une remorque (1) et un camion (2) selon la revendication 2, **caractérisé en ce que** les moyens de fixation (28) entre la partie de fixation du timon (13) et la partie de fixation de la remorque (14) du deuxième support (12) comprennent une goupille (24) configurée pour être introduite dans un logement (25) de la protubérance de forme tronconique (22) de l'élément de support (21) de la partie de fixation de la remorque (14) et en butée avec la plaque inférieure (16) de la partie de fixation du timon (13), de telle sorte que, avec la protubérance de forme tronconique (22) logée entre la plaque inférieure (16) et la plaque supérieure (17), la goupille (24) fixe la partie de fixation de la remorque (14) à la partie de fixation du timon (13).

4. Système pour relier une remorque (1) et un camion (2) selon la revendication 2, **caractérisé en ce que** les moyens de fixation (28) entre la partie de la fixation du timon (13) et la partie de fixation de la remorque (14) du deuxième support (12) comprennent des moyens de fixation pneumatiques.

5. Système pour relier une remorque (1) et un camion (2) selon l'une des revendications 1 à 4, **caractérisé en ce que** le mécanisme d'élévation de la remorque (26) comprend des supports télescopiques (27) capables de pivoter par rapport à la remorque (1).

6. Système pour relier une remorque (1) et un camion (2) selon la revendication 5, **caractérisé en ce que** les supports télescopiques (27) sont choisis parmi des supports pneumatiques, hydrauliques, mécaniques et une combinaison de ceux-ci.
